# EUROPEAN PATENT APPLICATION

(11) **EP 1 429 520 A2**
(43) Date of publication of application: **16.06.2004**
(21) Application number: 03257724.9
(22) Date of filing: 09.12.2003
(51) Int. Cl.: H04L 29/06, H04L 29/08

(54) **Communication Device and Communication Method**

(30) Priority: 09.12.2002 JP 2002357353
(71) Applicant: MATSUSHITA ELECTRIC INDUSTRIAL CO., LTD., Kadoma-shi, Osaka 571-8501 (JP)
(72) Inventor: Kikuchi, Takafumi, Tokyo 144-0046 (JP); Kawaguchi, Kyoko, Tokyo 156-0057 (JP); Takagi, Yoshihiko, Tokyo 144-0046 (JP); Minemura, Atsushi, Tokyo 173-0031 (JP)
(74) Representative: Leeming, John Gerard

(57) **Abstract**

The objective of the present invention is to provide a data processing apparatus that can employ together application programs for both a portable telephone and a contactless card terminal and that can communicate with an external device in accordance with a predetermined protocol by using, as needed, an appropriate-application program, and a data processing method that uses this data processing apparatus.

A hybrid portable communication terminal, which serves as a data processing apparatus and comprises terminals having different communication systems, can employ together or selectively, as needed, an application program for a telephone terminal and an application program for performing various data processing procedures, with an external communication terminal, using close-range contactless communication.

## Description

The present invention relates to a data processing apparatus, specifically a communication terminal, such as a portable telephone, and a data processing method, and in particular to a hybrid portable communication terminal that employs together communication functions using different protocols, and a request process method that uses this hybrid portable communication terminal.

As the use of portable telephones, such as so-called cellular phone systems, has spread, various application programs have been installed in personal, portable terminals, such as portable telephones, that permit users to access desired servers over the Internet. In addition, a contactless card terminal, in which a coil antenna and an IC are mounted, has been put to practical use and is actually being employed as a prepaid card for mass transit (see patent document 1 below). Furthermore, the standard for an example communication method that uses a contactless IC card is ISO 14443-B.

### [Patent Document 1]

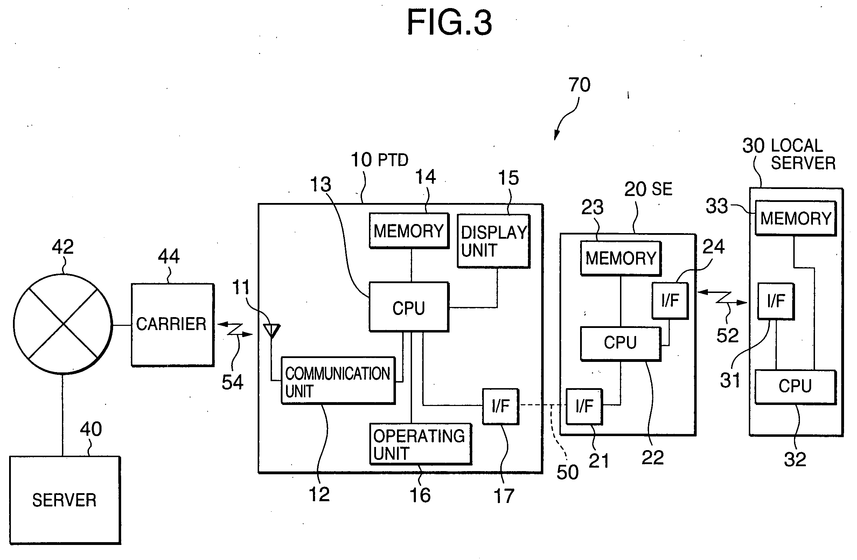

Japanese Patent Laid-Open Publication No. 2000-172806 (Fig. 3, paragraphs [0002] to [0004])

The usage factor is extremely large for personal portable terminals, such as the use of portable telephones or PDAs for the acquisition of a variety of information over the Internet. On the other hand, like a prepaid card, which is also called a secure card, a contactless card terminal provides high reliability because the basis on which balance information is stored is that security is guaranteed.

However, for a personal portable terminal (in this invention, also simply called a portable telephone) such as a portable telephone, a problem exists in that the contents stored in the contactless card terminal are not guaranteed, and the contactless card terminal does not have a function for communicating with parties across a wide range. The unique application programs are installed in the portable telephone and the contactless card terminal; however, since these programs are not employed cooperatively, the portable telephone cannot be employed to guarantee the contents stored in the contactless card terminal, or the contactless card terminal cannot be employed to exchange data with a communication party across a wide range.

It is, therefore, one objective of the present invention to provide a data processing apparatus (e.g., a hybrid portable communication terminal) that can cooperatively employ application programs for a second device, such as a portable telephone, and a first device, such as a contactless card terminal, and that can communicate with an external device in accordance with a desired protocol by using an application program required for such usage, and a data processing method (e.g., a request process method) that uses this data processing apparatus.

To achieve this objective, according to the present invention, a hybrid portable communication terminal, which is a data processing apparatus comprising terminals having different communication systems, can employ together, or can employ selectively, as needed, an application program for a portable telephone and an application program for performing various data processes through close-range contactless communication with an external communication terminal.

Specifically, according to a first aspect of the invention, a data processing apparatus comprises:
a first device; and
a second device detachably or fixedly connected to the first device,
wherein the first device includes
second communication means for communicating with the second device,
first storage means for storing a first application,
first control means for executing the first application, and for controlling the second communication means and the first storage means, and
wherein the second device includes
third communication means for communicating with the first device,
fourth communication means for communicating with an external device,
second storage means for storing a second application, and
second control means for controlling the second application, and for controlling the third communication means, the fourth communication means and the second storage means.

With this configuration, the application programs of the first and the second devices are employed together or employed selectively, as needed, to perform a desired process at high speed.

According to a second aspect of the invention, provided is the data processing apparatus of the first aspect, wherein, before or after a first process request has been received from the fourth communication means, the second control means activates the second application to process the first process request;
wherein, when all or part of the first process request is a second process request that is to be processed by the first application, the second application transmits the second process request to the second communication means through the third communication means;
wherein, before or after the second process request is received from the second communication means, the first control means activates the first application to process the second process request; and
wherein the first application processes the second process request, and transmits a process response to the third communication means through the second communication means.

With this configuration, the second process request is generated to permit the first device to handle all or part of the first process request received by the second device. Therefore, two application programs can be effectively employed cooperatively, and a desired process can be performed at high speed.

According to a third aspect of the invention, provided is the data processing apparatus of the first aspect, wherein, before or after a first process request has been received from the fourth communication means, the second control means activates the second application to process the first process request;
wherein the second application generates a second process request that is an instruction to obtain information required for processing the first process request, and transmits the second process request to the second communication means through the third communication means;
wherein the first control means processes the second process request, and transmits a process response to the third communication means through the second communication means.

With this configuration, the second process request is generated to obtain information required for processing the first process request that is received by the second device. Therefore, two application programs can be effectively employed cooperatively, and a desired process can be performed at high speed.

According to a fourth aspect of the invention, provided is the data processing apparatus according to the first aspect,
wherein the-first device includes output means for outputting information;
wherein, before or after a first process request has been received from the fourth communication means, the second control means activates a second application to process the first process request;
wherein the second application transmits, to the second communication means through the third communication means, information that is generated by processing the first process request; and
wherein the first control means transmits, to the output means, the information received from the second communication means.

With this arrangement, the process results provided by the cooperative employment of the first and the second devices can be output, e.g., can be displayed.

According to a fifth aspect of the invention, provided is the data processing apparatus according to the first aspect,
wherein the first device includes output means for outputting information;
wherein, before or after a first process request has been received from the fourth communication means, the second control means activates a second application to process the first process request;
wherein, when the first process request has been processed, the second application transmits, to the second communication means through the third communication means, additional information that is added to the first process request; and
wherein the first control means transmits, to the output means, the additional information received from the second communication means.

With this arrangement, the process can be performed by the cooperative employment of the first and the second devices, and the additional information can be output, e.g., can be displayed.

According to a sixth aspect of the invention, for the data processing apparatus of the second aspect, the second process request is an instruction for requesting the acquisition of information required for processing the first process request.

With this configuration, the first and the second devices cooperate during the performance of the operation, and since the information required for processing the request is also cooperatively acquired, a desired process can be performed at high speed.

According to a seventh aspect of the invention, for the data processing apparatus of the second aspect, the second process request is an instruction for requesting the acquisition of secure information required for performing secure processing for the first process request.

With this configuration, the first and the second devices cooperate during the performance of the operation, and since the secure information required for processing the request is also cooperatively acquired, a desired process can be performed at high speed.

According to an eighth aspect of the invention, for the data processing apparatus of the second aspect, the second process request is an instruction for requesting the supplementary process for an insufficient numerical value required for numerical processing for the first process request.

With this configuration, the first and the second devices cooperate during the performance of the operation, and the supplementary process can also be cooperatively performed for the insufficient numerical value required for processing the numerical request. Therefore, a desired process can be performed at high speed.

According to a ninth aspect of the invention, provided is the data processing apparatus according to the seventh aspect of the invention, wherein the first device includes:
output means for outputting information; and
input means for accepting the entry of information,
wherein the output means outputs data to request the entry of secure process information, and the input means accepts secure process information entered following the reception of the output data.

With this arrangement, the output means can request that a user enter secure process information, and the user can employ the input means to enter the secure process information.

According to a tenth aspect of the invention, provided is the data processing apparatus of the eighth aspect, wherein the first device includes:
first communication means for communicating with an external device;
output means for outputting information; and
input means for accepting the information that is entered,
wherein the first application employs the first communication means to communicate with a predetermined server across a network, and in accordance with an instruction received by the input means, the second process request is processed.

With this arrangement, in accordance with an instruction accepted by the input means, the application program for the predetermined server and the application programs for the first and second devices are employed together, or are employed selectively, as needed, to perform a desired process at high speed.

According to an eleventh aspect of the invention, a data processing apparatus comprises:
a first device; and
a second device detachably or fixedly connected to the first device,
wherein the first device includes
second communication means for communicating with the second device,
third communication means for communicating with an external device of the data processing apparatus,
first storage means for storing a first application,
first control means for executing the first application, and for controlling the second communication means and the first storage means, and
wherein the second device includes
fourth communication means for communicating with the first device,
second storage means for storing a second application, and
second control means for controlling the second application, and for controlling the fourth communication means and the second storage means.

With this configuration, the application programs of the first and the second devices are employed together or employed selectively, as needed, to perform a desired process at high speed.

According to a twelfth aspect of the invention, provided is the data processing apparatus of the eleventh aspect, wherein, upon receiving a first process request from the third communication means, the first control means transmits the first process request to the fourth communication means through the second communication means;
wherein, before or after the first process request has been received from the fourth communication means, the second control means activates a second application to process the first process request;
wherein, when all or part of the first process request is a second process request that is to be processed by the first application, the second application transmits the second process request to the second communication means through the fourth communication means;
wherein, before or after the second process request is received from the second communication means, the first control means activates the first application to process the second process request; and
wherein the first application processes the second process request, and transmits, to the fourth communication means through the second communication means, a second process response indicating the process results;
wherein the first application processes the second process request, and transmits to the fourth communication means, through the second communication means, a second process response indicating the process results;
wherein, upon receiving the second process response from the fourth communication means, the second application employs the second process response to process the first process request, and transmits to the second communication means, through the fourth communication means, a first process response indicating the process results; and
wherein, upon receiving the first process response from the second communication means, the first control means transmits the first process response to the third communication means.

With this arrangement, the second process request is generated to permit the second device to process all or part of the first process request received by the first device. Therefore, two applications can be effectively employed cooperatively, and a desired process can be performed at high speed.

According to a thirteenth aspect of the invention, provided is the data processing apparatus of the eleventh aspect, wherein, upon receiving a first process request from the third communication means, the first control means transmits the first process request to the fourth communication means through the second communication means;
wherein, before or after the first process request has been received from the fourth communication means, the second control means activates a second application to process the first process request;
wherein the second application generates a second process request that is an instruction to obtain information required for processing the first process request, and transmits the second process request to the second communication means through the fourth communication means;
wherein the first control means processes the second process request received from the second communication means, and transmits, to the fourth communication means through the second communication means, a second process response indicating the process results;
wherein, upon receiving the second process response from the fourth communication means, the second application employs the second process response to process the first process request, and transmits to the second communication means, through the fourth communication means, a first process response indicating the process results; and
wherein, upon receiving the first process response from the second communication means, the first control means transmits the first process response to the third communication means.

With this arrangement, the second process request is generated to obtain information required to process the first process request received by the first device. Therefore, two applications can be effectively employed cooperatively, and a desired process can be performed at high speed.

According to a fourteenth aspect of the invention, provided is the data processing apparatus according to the eleventh aspect, wherein the first device includes output means for outputting information;
wherein, upon receiving a first process request from the third communication means, the first control means transmits the first process request to the fourth communication means through the second communication means;
wherein, before or after the first process request has been received from the fourth communication means, the second control means activates a second application to process the first process request;
wherein the second application transmits, to the second communication means through the fourth communication means, information that is generated by processing the first process request; and
wherein the first control means transmits, to the output means, the information received from the second communication means.

With this arrangement, the process results provided by the cooperative employment of the first and the second devices can be output, e.g., can be displayed.

According to a fifteenth aspect of the invention, provided is the data processing apparatus according to the eleventh aspect, wherein the first device includes output means for outputting information;
wherein, upon receiving a first process request from the third communication means, the first control means transmits the first process request to the fourth communication means through the second communication means;
wherein, before or after the first process request has been received from the fourth communication means, the second control means activates a second application to process the first process request;
wherein, when the first process request has been processed, the second application transmits, to the second communication means through the third communication means, additional information that is added to the first process request; and
wherein the first control means transmits, to the output means, the additional information received from the second communication means.

With this arrangement, the process can be performed by the cooperative employment of the first and the second devices, and the additional information can be output, e.g., can be displayed.

Further, with this configuration, the first and the second devices cooperate during the performance of the operation, and since the information required for processing the request is also cooperatively acquired, a desired process can be performed at high speed.

According to a sixteenth aspect of the invention, a data processing method, for a data processing apparatus including a first device and a second device detachably or fixedly connected to the first device, whereby an external process request is processed by the cooperative employment of the first device and the second device, comprises:
a first step of the second device receiving, according to a third protocol, a first process request, which is a process request received from an external communication terminal;
a second step of, before or after the first step, the second device activating the second application to process the first process request;
a third step of the second application determining whether all or part of the first process request includes a second process request that is to be processed by the first device;
a fourth step of, when it is ascertained at the third step that the second process request is included, the second device transmitting the second process request to the first device in accordance with a second protocol;
a fifth step of the first device receiving the second process request in accordance with the second protocol;
a sixth step of, before or after the fifth step, the first device activating a first application to process the second process request;
a seventh step of the first application processing the second process request;
an eighth step of the first device transmitting a second process response, indicating the process results obtained at the seventh step, to the second device in accordance with the second protocol;
a ninth step of the second device receiving the second process response in accordance with the second protocol;
a tenth aspect of the second application employing the second process response to process the first process request; and
an eleventh step of the first device transmitting a first process response, indicating the process results obtained at the tenth step, in accordance with the third protocol.

With this configuration, the application programs of the first and the second devices are employed together or employed selectively, as needed, to perform a desired process at high speed.

According to a seventeenth aspect of the invention, a data processing method, for a data processing apparatus including a first device and a second device detachably or fixedly connected to the first device, whereby an external process request is processed by the cooperative employment of the first device and the second device, comprises:
a first step of the second device receiving, according to a third protocol, a first process request, which is a process request received from an external communication terminal;
a second step of, before or after the first step, the second device activating the second application to process the first process request;
a third step of the second application determining whether there is a lack of information to process the first process request, or whether the acquisition of lacking information from the first device is required;
a fourth step of, when it is ascertained at the third step that the acquisition of the information is required, the second device generating a second process request that is an instruction to request the acquisition of the information that is lacking;
a fifth step of the second device transmitting the second process request to the first device in accordance with the second protocol;
a sixth step of the first device receiving the second process request in accordance with the second protocol;
a seventh step of the first device processing the second process request;
an eighth step of the first device transmitting a second process response, indicating the process results obtained at the seventh step, to the second device in accordance with the second protocol;
a ninth step of the second device receiving the second process response in accordance with the second protocol;
a tenth step of the second application employing the second process response to process the first process request; and
an eleventh step of the first device transmitting a first process response, indicating the process results obtained at the tenth step, in accordance with the third protocol.

With this configuration, the first and the second devices cooperate during the performance of the operation, and the supplementary process can also be cooperatively performed for the insufficient numerical value required for processing the numerical request. Therefore, a desired process can be performed at high speed.

According to an eighteenth aspect of the invention, a data processing method, for a data processing apparatus including a first device and a second device detachably or fixedly connected to the first device, whereby an external process request is processed by the cooperative employment of the first device and the second device, comprises:
a first step of the second device receiving, according to a third protocol, a first process request, which is a process request received from an external communication terminal;
a second step of, before or after the first step, the second device activating the second application to process the first process request;
a third step of the second application processing the first process request, and generating process result information;
a fourth step of the second device transmitting the process result information to the first device in accordance with the second protocol;
a fifth step of the first device receiving the process result information in accordance with the second protocol; and
a sixth step of the first device outputting the process result information.

With this configuration, the application programs of the first and the second devices are employed together or employed selectively, as needed, to perform a desired process at high speed.

According to a nineteenth aspect of the invention, a data processing method, for a data processing apparatus including a first device and a second device detachably or fixedly connected to the first device, whereby an external process request is processed by the cooperative employment of the first device and the second device, comprises:
a first step of the second device receiving, according to a third protocol, a first process request, which is a process request received from an external communication terminal, and additional information that is added to the first process request;
a second step of, before or after the first step, the second device activating the second application to process the first process request;
a third step of the second application processing the first process request;
a fourth step of the second device transmitting the additional information to the first device in accordance with the second protocol;
a fifth step of the first device receiving the additional information-in accordance with the second protocol; and
a sixth step of the first device outputting the additional information.

With this arrangement, the process can be performed by the cooperative employment of the first and the second devices, and the additional information can be output, e.g., can be displayed.

According to a twentieth aspect of the invention, a data processing method, for a data processing apparatus including a first device and a second device detachably or fixedly connected to the first device, whereby an external process request is processed by the cooperative employment of the first device and the second device, comprises:
a first step of the first device receiving, in accordance with a third protocol, a first process request, which is a process request received from an external communication terminal;
a second step of the first device transmitting the first process request to the second device in accordance with a second protocol;
a third step of the second device receiving the first process request according to a second protocol;
a fourth step of, before or after the first step, the second device activating the second application to process the first process request;
a fifth step of the second application determining whether all or part of the first process request includes a second process request that is to be processed by the first device;
a sixth step of, when it is ascertained at the third step that the second process request is included, the second device transmitting the second process request to the first device in accordance with a second protocol;
a seventh step of the first device receiving the second process request in accordance with the second protocol;
an eighth step of, before or after the seventh step, the first device activating a first application to process the second process request;
a ninth step of the first application processing the second process request;
a tenth step of the first device transmitting a second process response, indicating the process results obtained at the ninth step, to the second device in accordance with the second protocol;
an eleventh step of the second device receiving the second process response in accordance with the second protocol;
a twelfth step of the second application employing the second process response to process the first process request; and
a thirteenth step of the second device transmitting, to the first device a first process response, indicating the process results obtained at the twelfth step, in accordance with the second protocol;
a fourteenth step of the first device receiving the first process response in accordance with the second protocol; and
a fifteenth step of the first device transmitting the first process response in accordance with the third protocol.

With this configuration, the first device transmits the received process request to the second device to permit the second device to process the request, and the second device transmits the second process request to the first device to permit the first device to process all or part of the first process request. Therefore, the two application programs can effectively cooperate, and a desired process can be performed at high speed.

According to a twenty-first aspect of the invention, the first device according to one of the first to the fifteenth aspects is provided.

With this arrangement, when the first and the second devices are appropriately employed, the application programs for these two devices can be employed together or selectively, as needed, to perform a desired process at high speed.

According to a twenty-second aspect of the invention, the second device according to one of the first to the fifteenth aspects is provided.

With this arrangement, when the second and the first devices are appropriately employed, the application programs for these two devices can be employed together or selectively, as needed, to perform a desired process at high speed.

Embodiments of the invention will be described below with reference to the accompanying drawings, in which:
Fig. 1 is a block diagram showing the basic configuration of a data processing apparatus according to a first embodiment of the present invention;
Fig. 2 is a block diagram showing the basic configuration of a data processing apparatus according to a second embodiment of the present invention;
Fig. 3 is a diagram showing a hybrid portable communication terminal as a specific example of the data processing apparatus according to the first embodiment of the present invention;
Fig. 4 is a schematic diagram for explaining the operation of the first embodiment of the present invention, i.e., a request processing method that uses a hybrid portable communication terminal;
Fig. 5 is a sequence chart showing the processing using the request processing method shown in the schematic diagram in Fig. 4;
Fig. 6 is a schematic diagram for explaining the operation of the first embodiment of the present invention, i.e., another example of the request processing method that uses the hybrid portable communication terminal;
Fig. 7 is a sequence chart showing another processing example of the request processing method shown in the schematic diagram in Fig. 6;
Fig. 8 is a diagram showing the configuration of a hybrid portable communication apparatus, a specific example of the data processing apparatus according to the second embodiment of the invention;
Fig. 9 is a schematic diagram for explaining the operation performed by the second embodiment of the invention, i.e., a request processing method using the hybrid portable communication terminal;
Fig. 10 is a sequence chart showing the processing performed using the request processing method shown in the schematic diagram in Fig. 9;
Fig. 11 is a schematic diagram for explaining the operation performed by the second embodiment of the present invention, i.e., another example of the request processing method that uses the hybrid portable communication terminal;
Fig. 12 is a sequence chart showing another example of the processing performed using the request processing method shown in the schematic diagram in Fig. 11;
Fig. 13 is a diagram showing an example obtained by expanding the first embodiment of the present invention; and
Fig. 14 is a diagram showing an example obtained by expanding the second embodiment of the present invention.

### DETAILED DESCRIPTION OF THE PREFERRED EMBODIMENTS

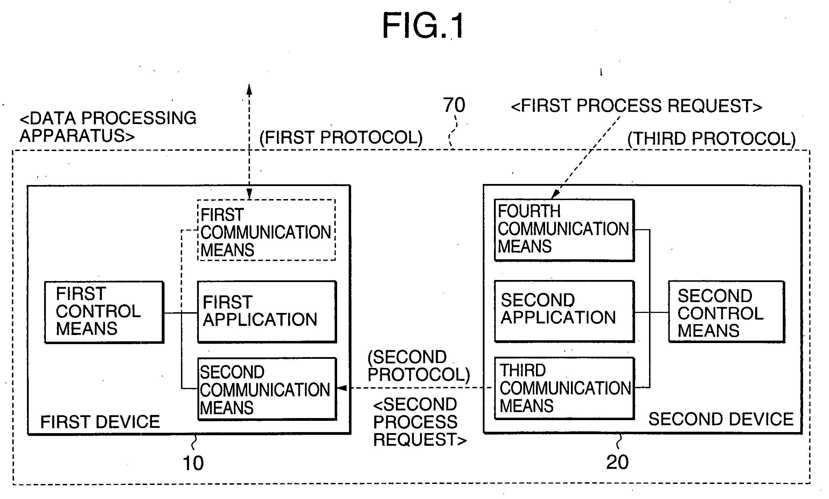

A data processing apparatus (e.g., a hybrid portable communication terminal wherein a portable terminal and a card are interconnected) and a data processing method (e.g., a request processing method) that uses this apparatus, in accordance with the preferred embodiments of the present invention, will now be described while referring to Figs. 1 to 14.

### <Basic Configuration For A First Embodiment>

The basic configuration of a data processing apparatus according to a first embodiment of the present invention will now be described while referring to Fig. 1. According to the basic configuration for the first embodiment, a data processing apparatus 70 comprises: a second device 20, for receiving and processing an external process request, and a first device 10, which cooperates with the second device 20. The first and the second devices 10 and 20, in cooperation, handle the process request. In this case, "cooperation" is defined as means whereby an action relative to the first device 10 is performed, including a case wherein the first device 10 supports a process requested of the second device 20; one wherein the second device 20, without first performing any special process, transmits the process request to the first device 10 and the first device 10 handles it; one wherein the first device 10 outputs process results obtained by the second device 20; and one wherein the first device 10 outputs additional information that is not always very relevant to the handling of the process request.

As is described above, the data processing apparatus 70 in Fig. 1 roughly comprises the first device 10 (e.g., a portable terminal or a portable telephone), and the second device 20 (e.g., an IC card), which has a tamper resistant storage area that is detachably or fixedly connected to the first device 10. Further, the first device 10 includes: first communication means (e.g., a communication unit and an antenna for wireless communication with a server), which performs communication in accordance with a first protocol; second communication means (e.g., a contact I/F for exchanging data with the second device 20), which performs communication in accordance with a second protocol; first storage means (e.g., a portable application), which stores a first application; and first control means (e.g., the CPU of the first device 10), which executes the first application and controls the first communication means, the second communication means and the first storage means.

The second device 20 (e.g., an IC card) includes: third communication means (e.g., a contact I/F for exchanging data with the first device 10), which communicates with the first device 10 in accordance with the second protocol; fourth communication means (e.g., a contactless I/F for performing close-range communication with an external terminal, such as a ticket examination machine or a POS), which performs communication in accordance with a third protocol; second storage means (e.g., a card application), which stores a second application; and second control means (e.g., the CPU of the second device 20), which executes the second application and controls the third communication means, the fourth communication means and the second storage means.

In the following explanation, as typical examples, the first device 10 is a portable telephone and the second device 20 is an IC card, and the cooperation between the first and the second devices 10 and 20 is described.

(1) An example of the cooperation between the first and the second devices 10 and 20 will now be described. Before, or after, the second device (IC card) 20 receives through the fourth communication means (contactless I/F) a first process request (e.g., a ticket-examination request or an accounting request), which is an external process request, the second device 20 activates a second application program (also simply called an application or a card application). When (1) all or (2) part of the first process request is a second process request to be processed by the first application program (also simply called an application or a portable application), the second application transmits the second process request to the first device 10 (a portable terminal) through the third communication means (a contact I/F). The first device 10 (the CPU of the portable telephone) activates the first application (a portable application) before or after the second process request is received through the second communication means (a contact I/F). The first application then handles the second process request, and transmits a process response to the second device 20 (an IC card) through the second communication means (a contact I/F).

When (1) all of the first process request indicates the second process request, the main body that should handle the external process request is not the second device 20 but the first device 10, and in this case, the second device 20 transfers the first process request to the first device 10 unchanged.

An explanation will now be given for the case (2) wherein part of the first process request is the second process request, i.e., a case wherein the main body that should handle the external process request is the second device 20, and the first device 10 supports the handling of the second process request (a process that cannot be performed merely by the second device 20, or a process by which required information cannot be obtained by the second device 20.

The example for the second process request is, in response to the first process request, (1-1) a process for verifying the accounting for a large sum of money that is the result obtained when an accounting process using the POS terminal has been performed, or (1-2) a process for performing the charging to increase the number of units when the remaining units are insufficient for the unit count processing.

### (1-1) Cooperation through secure processing

As a result of the cooperation between the first and the second devices 10 and 20, the following cases are probable: a case wherein, when the accounting process for a predetermined amount of money, or more, should be performed using the IC card, which is the second device 20, the secure process information required for the verification is requested from the portable terminal, which is the first device 10; a case wherein the portable application, which is the first application, requests that a certificate held in the portable terminal be required, and performs the verification process based on the obtained certificate; and a case wherein the PIN, or a password constituting a personal identification number, is obtained from the user of the portable terminal, and the verification process is performed based on the information that is obtained. That is, when the IC card, which is the second device 20, requests that the first device 10 acquire the secure process information (e.g., a certificate or a PIN/password) required for the secure process, the first and the second devices 10 and 20 cooperatively perform the processing.

### (1-2) Cooperation through the lack of a supplementary information process

As examples of the cooperation between the first and the second devices 10 and 20, the following are probable cases: one wherein, when the number of units for the numerical process is insufficient, such as when for the unit count process performed by the IC card, the second device 20, the charging to increase the number of units lacking is requested of the portable terminal, which is the first device 10; and one wherein the portable application, which is the first application, performs the charging to increase the number of units, e.g., communicates with a predetermined server for the charging to increase the number of units. That is, when the IC card, which is the second device 20, requests that the first device 10 perform a supplementary process to supply information that is lacking, the first and the second devices 10 and 20 perform the cooperative processing.

(2) An explanation has been given for the case wherein the first application, which is the first device 10, performs the support process for the second process request (a process that cannot be performed merely by the second device 20, or a process through which necessary information cannot be obtained when performed only by the second device 20). There is another case wherein the second application dynamically generates a command corresponding to the first application and transits it to the first device 10, and the first device 10 processes this command and transmits a response. In this case, an application corresponding to the first application is not especially required for the first device 10.

### (3) Cooperation based on a result notification

As an example of this cooperation, the following is a probable case. Before or after the second device 20 (an IC card) receives the first process request (external process request) through the fourth communication means (a contactless I/F), the second device 20 activates the second application (a card application), and the second application transmits to the first device 10 (a portable terminal), through the third communication means (a contact I/F), the result information generated by processing the first process request. The first device 10 (a portable terminal) transmits (e.g., displays the information on a screen, outputs the information as speech, or prints the information) to the output means the result information received through the second communication means (a contact I/F).

The result notification for the cooperation is a notification indicating the process results obtained by the IC card, a notification indicating the normal completion of the operation, an error notification (e.g., indicating the number of units in the numerical process is insufficient), or an electronic receipt or a balance notification generated through the accounting process.

### (4) Cooperation through the output of additional information

As an example of this cooperation, the following is a probable case. Before or after the second device 20 (an IC card) receives the first process request (an external process request) through the fourth communication means (a contactless I/F), the second device 20 activates the second application (a card application). When the first process request has been processed, the second application transmits to the first device 10 (a portable terminal) through the third communication means (a contact I/F), the additional information that has been added to the first process request. The first device 10 (a portable terminal) then transmits (e.g., displays the information on a screen, outputs the information as speech, or prints the information) to the output means the additional information received through the second communication means (a contact I/F).

For this cooperation effected through the output of additional information, there are cases in which an advertisement is presented during a ticket examination process (e.g., an advertisement for a relevant entertainer or information related to a new musical recording produced by a recording company) and in which an event scheduled for the day and news for the day are presented in addition to and during a company entrance admission process. Instead of adding the information to the external process request, the information may be obtained from an external terminal after the second device 20 (an IC card) has completed the process, and the obtained information may be output to the first device 10 (a portable terminal). The first communication means is not especially required for cases other than case (1-2).

### <Basic Configuration For A Second Embodiment>

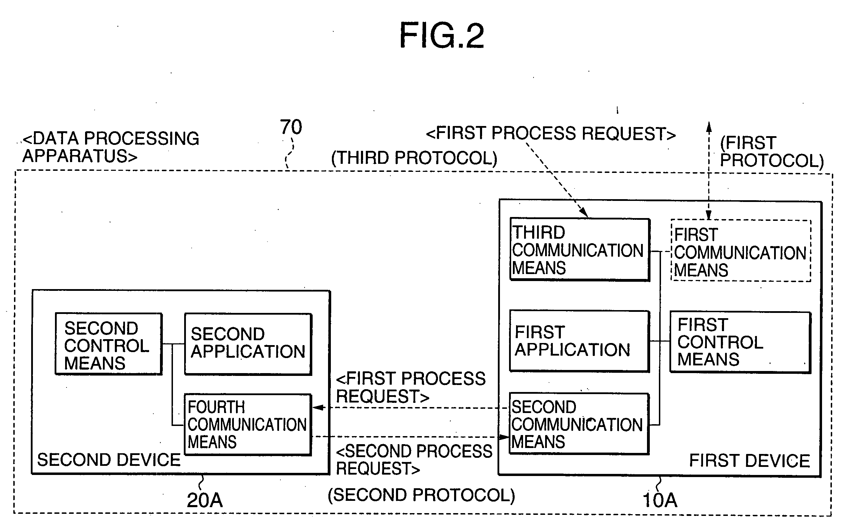

The basic configuration of a data processing apparatus according to a second embodiment of the present invention will now be described while referring to Fig. 2. According to the basic configuration for the second embodiment, a data processing apparatus 70 comprises: a first device 10A for receiving and processing an external process request; and a second device 20A that cooperates with the first device 10A, and the first and the second devices 10A and 20A that cooperate in the handling of the process request. This configuration differs from the basic configuration (Fig. 1) for the first embodiment in that the external process request is received first by the first device 10A, not by the second device 20A. Although a data processing apparatus 70 having a basic configuration conforming to the second embodiment differs slightly from a data processing apparatus 70 having a basic configuration conforming to the first embodiment, for the sake of convenience, in both instances in the following explanation, the same reference number 70 is employed.

As is described above, the data processing apparatus 70 in Fig. 2 roughly comprises the first device 10A (e.g., a portable terminal or a portable telephone) and the second device 20A (e.g., an IC card), which has a tamper resistant storage area and which is detachably or fixedly connected to the first device 10A. Further, the first device 10A includes: first communication means (e.g., an antenna for wireless communication with a server) for performing communication in accordance with a first protocol; second communication means (e.g., a contact I/F for exchanging data with the second device 20A) for performing communication in accordance with a second protocol; third communication means (e.g., a contactless I/F for close-range communication with an external terminal, such as a ticket examination machine or a POS) for performing communication in accordance with a third protocol; first storage means (e.g., a portable application) for storing a first application; and first control means (e.g., the CPU of the first device 10A) for executing the first application and for controlling the first communication means, the second communication means, the third communication means and the first storage means.

The second device 20A (e.g., an IC card) includes: fourth communication means (e.g., a contact I/F for exchanging data with the first device 10A) for communicating with the first device 10A in accordance with the second protocol; second storage means (e.g., a card application) for storing a second application; and second control means (e.g., the CPU of the second device 20A) for executing the second application and for controlling the fourth communication means and the second storage means.

An explanation will now be given for the cooperation between the first and the second devices 10A and 20A, while citing as typical examples, of the basic configuration according to the first embodiment, the first device 10A, a portable terminal, and the second device 20A, an IC card. The ways in which the examples differ greatly from the basic configuration (Fig. 1), as set out in the first embodiment, are:
(a) Since an external process request is received first by the first device 10A (a portable terminal), this process request is transferred to the second device 20 (an IC card) (i.e., the first process request (an external process request) received through the third communication means (a contactless I/F) is transmitted to the fourth communication means (a contact I/F for the portable terminal) through the second communication means (a contact I/F)); and
(b) Since the second device (IC card) 20A has no communication means for transmitting, directly to the external terminal, the results obtained by processing the external process request, the second device 20A transmits the process results to the first device 10A (a portable terminal), and the first device 10A transmits the results to the external terminal (i.e., the results obtained by processing the first process request are transmitted to the second communication means (a contact I/F for the portable terminal) through the fourth communication means (a contact I/F), and the process results obtained from the second communication means are transmitted to the external terminal through the third communication means (a contactless I/F)).

The cooperative processes performed by the first and the second devices 10A and 20A for the above described cases (a) and (b) are the same as those performed for the basic configuration of the first embodiment. These cooperative processes include: the process (corresponding to (1)) relative to the second process request transmitted by the fourth communication means (a contact I/F for the IC card) to the second communication means (a contact I/F for the portable terminal); the process (corresponding to (2)) relative to the dynamic generation and transmission of a command that is the equivalent of the second process request; the process (corresponding to (3)) relative to the result notification; and the process (corresponding to (4)) relative to the output of additional information.

As the methods employed to transfer the external process request to the second device 20A (an IC card) in the case (a), either the external process request may be transferred unconditionally, or whether this request is a command to be processed by the first device 10A (a portable terminal) may be determined, and if it is ascertained that the request should be processed by the second device 20A (an IC card), the request may be transferred. Either method can be employed, and while it is assumed that this embodiment includes both methods, no further explanation for them will be given.

Furthermore, as an additional information output method, which is the fourth cooperation process performed by the first and the second devices 10A and 20A, when information is added to an external process request, the information may be transmitted by the first device 10A (a portable terminal) to the second device 20A (an IC card), and when the process has been completed, the additional information may be transmitted to the first device 10A and output externally. Either this, or the additional information may be held by the first device 10A and not transmitted to the second device 20A, and when the process has been completed by the second device 20A and a process end notification has been received, the first device 10A may output the additional information. When information is not added to the external process request, after the process has been completed by the second device (IC card) 20A, the information may be obtained from the external device and output by the first device 10A (a portable terminal).

When the basic configuration (Fig. 2) for the second embodiment is compared with the basic configuration (Fig. 1) for the first embodiment, for the second embodiment, the manufacturing cost can be reduced because only one interface (a contact I/F, which is the fourth communication means for the portable terminal) is required for the second device 20A (an expensive IC card), while data exchanges such as (a) and (b) are repeatedly performed, and the first device 10A (a portable telephone) must be rendered active, because otherwise the reception of the first process request will be overlooked.

For the first embodiment, since because the IC card is employed as the second device 20A power can be supplied by electromagnetic induction, a savings in power is possible, and the process steps, such as (a) and (b), are not required, and while the manufacturing costs are slightly increased because a plurality of interfaces (the contact I/F, which is the third communication means with the portable terminal, and the contactless I/F, which is the fourth communication means with the external terminal) are required for the second device 20A (an expensive IC card).

### <First Embodiment>

While referring to Fig. 3, an explanation will now be given for a hybrid portable communication terminal having a basic configuration according to the first embodiment of the present invention. Fig. 3 is a block diagram showing the hardware configuration for the first embodiment and its peripheral configuration. In Fig. 3, a hybrid portable communication terminal 70 for this invention comprises: a personal trusted device 10 (a PTD); and a secure card terminal 20 (an SE). The personal trusted device 10 can be a modification of a portable telephone for a well known cellular phone system (includes a portable telephone and a PHS), and the secure card terminal 20 can be a modification of a so-called contactless IC card that adopts a close-range electromagnetic induction communication system. In this invention, the personal trusted device 10 is referred to simply as the PTD 10, and the secure card terminal 20 is referred to simply as the SE 20.

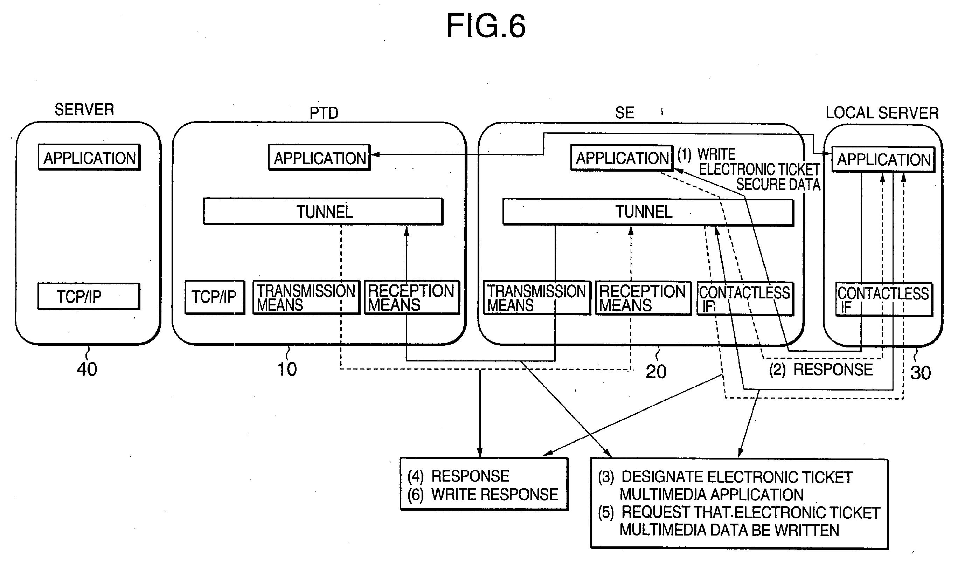

In Fig. 3, a server 40 is a predetermined data supply source/data processing apparatus to which the PTD 10 can be connected through the facility of a carrier 44, which is a communication provider, and the Internet 42. Since the arrangement from the server 40 to the carrier 44 constitutes a conventional system, no detailed explanation for it will be given. The local server 30 in Fig. 6 is an external communication terminal and employs the above described close-range electromagnetic induction communication system. The local server 30, which serves as an external communication terminal, is the same as a contactless (or a light-contact) communication terminal for an IC card, provided, for example, at a ticket gate in a station. The local server 30 includes a memory 33 in which a program and data are stored, an interface 31 (an I/F), and a CPU (Central Processing Unit) for controlling these components.

The PTD 10 includes: an antenna 11, in addition to one provided for a portable telephone; a communication unit 12; a CPU 13; a memory 14; a display unit 15; and an operating unit 16, provided in order to execute the basic functions of a common portable telephone or a portable terminal. The antenna 11, the communication unit 12, the memory 14, the display unit 15 and the operating unit 16 are all connected to the CPU 13 (a bus line and an interface are employed for the actual connection of these components). Although a battery is not shown in Fig. 6, one is incorporated. In addition to the configuration of a conventional portable telephone, the PTD 10 also includes an interface 17 (an I/F) that is connected to the CPU 13. This interface 17 is used to communicate with the SE 20.

The SE 20 includes: an interface 24 (an I/F) that incorporates an antenna and a communication unit, as does a well known contactless IC card; a CPU 22; and a memory 23, all of which are provided in order to execute the basic functions of a common contactless IC card. The interface 24 and the memory 23 are connected to the CPU 22 (a bus line and an interface are employed for the actual.connection of these components). In addition to the configuration of a conventional contactless IC card, the SE 20 also includes an interface 21 (an I/F), which is connected to the CPU 22. This interface 21 is used for communication with the PTD 10. Further, since a conventional secure card is passively operated when, upon the reception of an external electric wave, power is generated by the coil antenna through electromagnetic induction, the secure card generally does not include a battery. In this embodiment, the SE 20 receives power from the PTD 10 across a connection line (not shown), so that the SE 20 can be actively operated, as will be described later. Furthermore, when needed, a battery can be incorporated in the SE 20.

The SE 20 can be provided either fixed to or detachable from the casing (not shown) of the PTD 10. Since wired communication is performed between the PTD 10 and the SE 20, for communication with the SE 20, which is fixedly provided, an extended connection cable, indicated by a broken line 50, must be provided between the interface 17 and the interface 21. For communication with the SE 20, which is detachable, the contact portion of the cable 50 must be provided for the detachable portion, and when the SE 20 is mounted on the casing of the PTD 10, the interface 17 and the interface 21 are interconnected.

OSes and application programs for controlling the operation of the CPUs 13 and 22 are respectively stored in the memory 14 of the PTD 10 and the memory 23 of the SE 20. During actual operation, these application programs are activated and various processes are performed. In Fig. 6, the SE 20 and the local server 30 communicate by using a close-range wireless communication wave 52 (an electromagnetic wave), and the PTD 10 and the carrier 44 communicate by using a cellular phone system wireless communication wave 54. The PTD 10 employs the communication unit 12, including a transmitter and a receiver, to communicate with the server 40 through the carrier 44 and across the Internet 42 in accordance with a first protocol, such as the well known TCP/IP. Further, the PTD 10 and the SE 20 communicate with each other through the interfaces 17 and 21 in accordance with a second protocol, while the SE 20 and the local server 30 communicate with each other in accordance with a third protocol, such as the well known ISO 14443-B. As the second protocol, an appropriate one is selected from among well known conventional protocols, and a modification of the protocol defined by ISO 7816 can be employed.

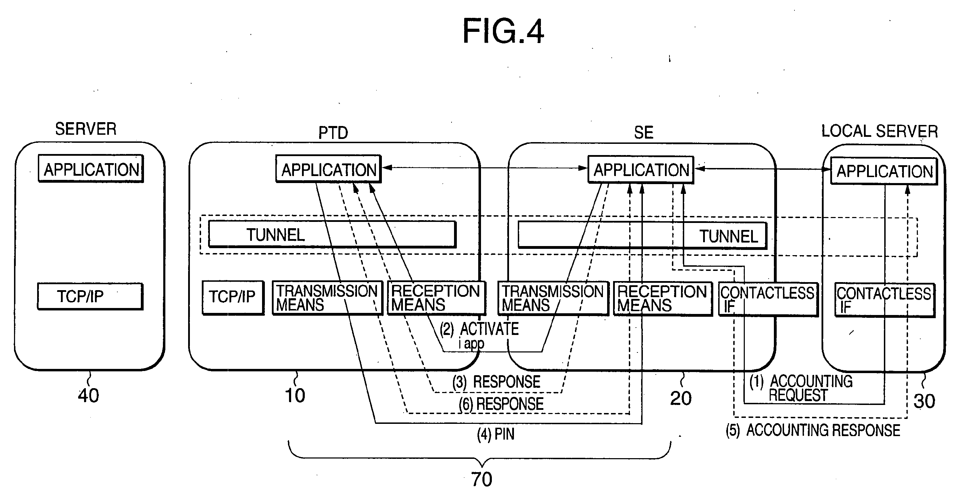

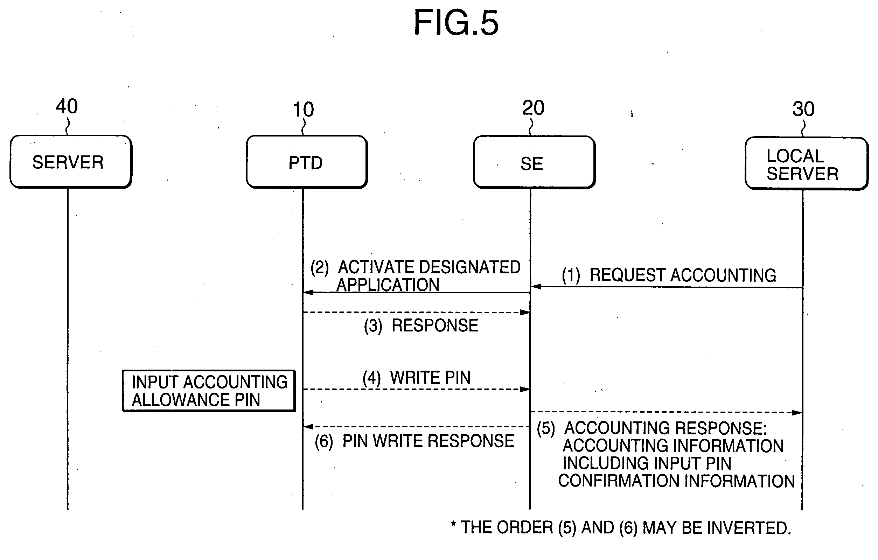

While referring to Figs. 4 and 5, an explanation will now be given for the operation of the first embodiment in Fig. 3, i.e., the request processing method that uses the hybrid portable communication terminal 70. According to this invention, a process request is handled that is issued by an accounting terminal, such as a transportation facility, a fee-charging facility, a ticket shop, a ticket vending machine or a POS terminal, in order to perform the electronic accounting required for electronic money, a prepaid card or electronic security. In this explanation, the SE 20 is the electronic money, and the local server 30 is a POS terminal, such as a supermarket. In Fig. 4, the "contactless I/F" between the local server 30 and the SE 20 corresponds to the interface 31 or 24 in Fig. 3; the "transmission means" and the "reception means" of the SE 20 correspond to the interface 21 in Fig. 3; the "application" of the PTD 10, the "application" of the SE 20 and the "application" of the local server correspond to the application programs stored in the memories 14, 23 and 33 in Fig. 3; and "Server" corresponds to the server 40 in Fig. 3. In this situation, suppose that the application program of the SE 20 has an accounting function that allocates up to a maximum 5,000 yen for one shopping visit.

Assume that a user having a PTD 10 in which an SE 20 is mounted shops in a supermarket and pays for purchases at a cash register. Thus, since a local server 30 is installed at the cash register, when the user having the PTD 10, which includes the SE 20, approaches the interface 31 of the local server 30, (1) the local server 30 transmits an accounting request to the SE 20, and the CPU 22, upon receiving the accounting request through the interface 24, performs a predetermined analyzation, reads a predetermined application program from the memory 23 and activates the program. Then, if the total purchase amount does not exceed 5,000 yen, a payment instruction is issued by the application program, and an accounting response is transmitted through the-interface 24 to the local server 30.

If the total purchase amount exceeds 5,000 yen, no accounting is performed by the application program provided for the SE 20, and (2) a request to the PTD 10 is issued, through the interfaces 21 and 17, for the activation of a designated application program (an i application (iapp) in the example in Fig. 3). Upon receiving this request, (3) the PTD 10 transmits a response to the SE 20 and the PTD 10 displays a predetermined message, on the display 15, asking the user whether the accounting should be performed, i.e., the CPU 13 controls the display of this message. This displayed message is, for example, "The total payment for the purchases is 15,800 yen. Since the payment exceeds 5,000 yen, the automatic accounting process is disabled. If you approve the payment, enter your password and depress #. If you do not approve the payment, depress 0 and #". Thus, in accordance with this instruction, the user enters required data, and when the user depresses 0 and #, no accounting is performed and a notification to this effect is transmitted to the local server 30 through the SE 20. The password in this case is a PIN (personal identification number) that is allocated when the SE 20 is obtained (purchased). In the above example, when the password and the # are entered, (4) the PTD 10 notifies the SE 20 that a predetermined instruction has been entered, i.e., the PIN has been entered, and the SE 20 determines whether the received PIN is correct. (5) When the PIN is correct, the SE 20 transmits, to the local server 30, a predetermined notification, i.e., information indicating that the accounting is to be performed. Further, (6) the SE 20 transmits, to the PTD 10, a PIN write response indicating that the notification (4) has been received. In this case, the processes (5) and (6) may be inverted.

In this example, the PTD 10 activates the application program to ask the user to approve the payment. The PTD 10 may also access the server 40, across the Internet 42, to ask for the approval.

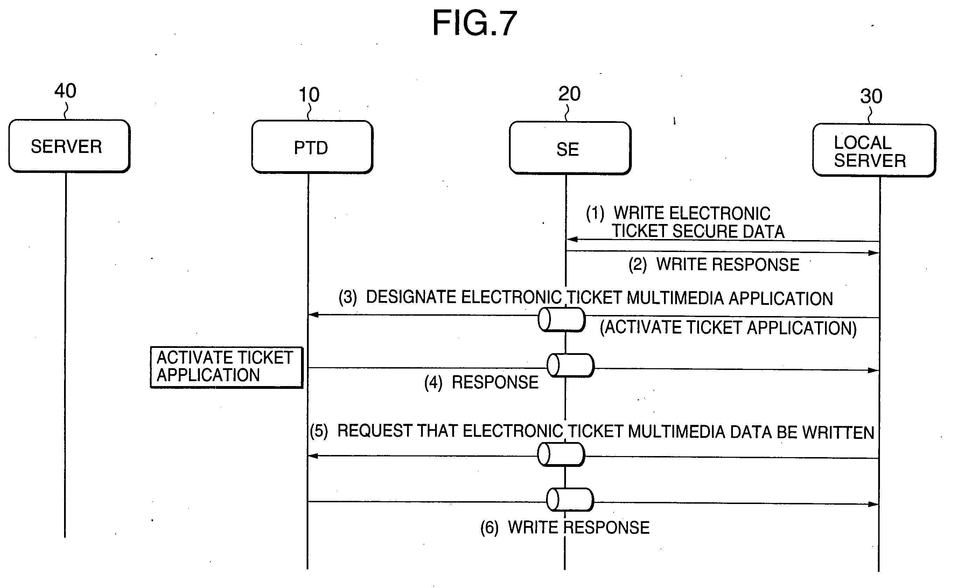

While referring to Figs. 6 and 7, an explanation will now be given for the operation performed by the first embodiment in Fig. 3, i.e., another example request processing method that uses the hybrid portable communication terminal 70. Unlike the example in Figs. 4 and 5, the operation is performed as though the local server 30 is accessing the application program of the PTD 10 directly, without passing through the application program of the SE 20. In this explanation, the hybrid portable communication terminal 70 is employed to purchase an electronic ticket from the local server 30.

A user approaches the PTD 10, which includes the SE 20, near the interface 31 of the local server 30. During this approach, (1) the local server 30 transmits to the SE 20 a secure electronic ticket data write request. Upon receiving the secure electronic ticket data write request through the interface 24, the CPU 22 performs a predetermined analyzation, and reads a predetermined application program from the memory 23 and activates this program. At this time, the secure electronic ticket data are written to the memory 23. Then, (2) the application program transmits a response to notify the local server 30 that the secure electronic ticket data have been written. Thereafter, the local server 30 and the PTD 10 can exchange data by passing it through the SE 20. That is, the CPU 22 controls the interfaces 21 and 24 as though the SE 20 is serving as a tunnel for a data path. Then, (3) through the SE 20, the local server 30 designates for the PTD 10 an electronic ticket, multimedia application program to be activated. The PTD 10 then reads, from the memory 14, the electronic multimedia application program and activates this program. Thereafter, (4) the PTD 10 transmits a response to this effect to the local server 30, through the SE 20, and (5) the local server 30 transmits to the PTD 10, through the SE 20, an electronic ticket multimedia data write request, after which (6) the PTD 10 transmits a write response to the local server 30 through the SE 20.

In this example, the PTD 10 activates the application program and performs data processing for an electronic ticket. However, the PTD 10 may access the server 40 through the Internet 42 to request further data processing.

### <Second Embodiment>

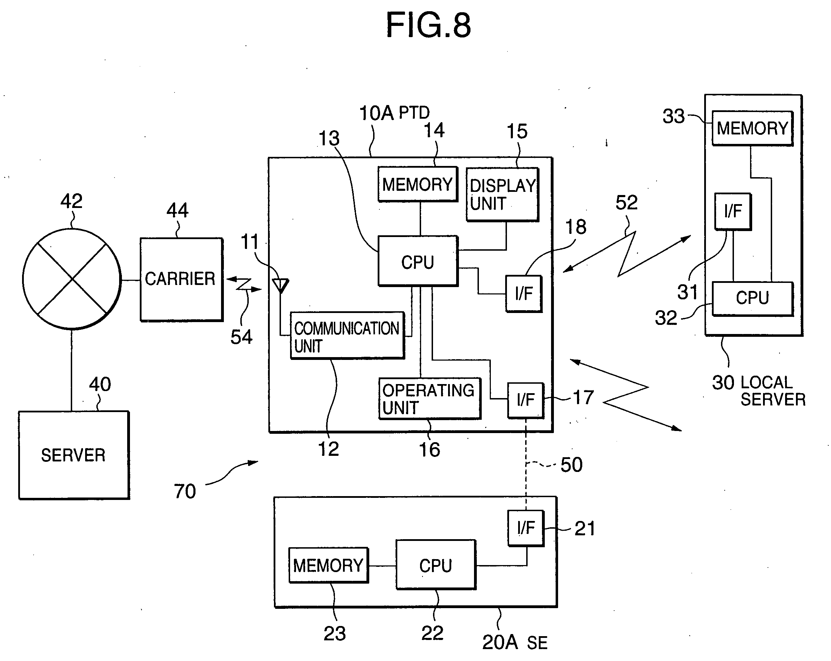

A hybrid portable communication terminal 70 having the basic configuration according to the second embodiment of the present invention will now be described while referring to Fig. 8. In Fig. 8, since the same reference numerals as those employed in Fig. 3 are used to denote corresponding components, no further explanation for them will be given. Here, it should be noted, the second embodiment in Fig. 8 differs from the first embodiment in Fig. 3 in the following manner, in the first embodiment, the interface 24, provided for the SE 20, is employed to communicate with the local server 30, which is an external communication terminal, while in the second embodiment, an interface 18 is provided for a PTD 10A and performs a close-range contactless communication with a local server 30. A secure card SE 20A for the second embodiment has substantially the same arrangement as the SE 20 of the first embodiment, except that the secure card SE 20A does not have a communication interface with the local server 30. Also in the second embodiment, although the SE 20A receives power from a PTD 10A, an independent power source may be provided as needed. The PTD 10A employs a communication unit 12 to communicate with a server 40 through a carrier 44 and across the Internet 42 in accordance with a well known first protocol. The PTD 10A and the SE 20A communicate with each other through interfaces 17 and 21 in accordance with a second protocol, which can be an appropriate protocol selected from among conventional well known protocols, and the PTD 10A and the local server 30 communicate with each other in accordance with a well known third protocol. It should be noted that the first to the third protocols for the first embodiment can be employed unchanged for the second embodiment.

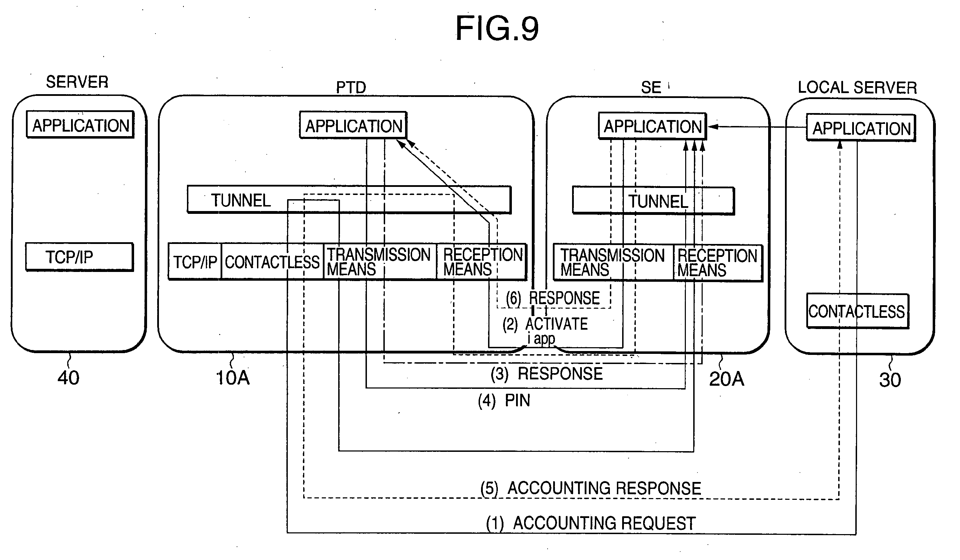

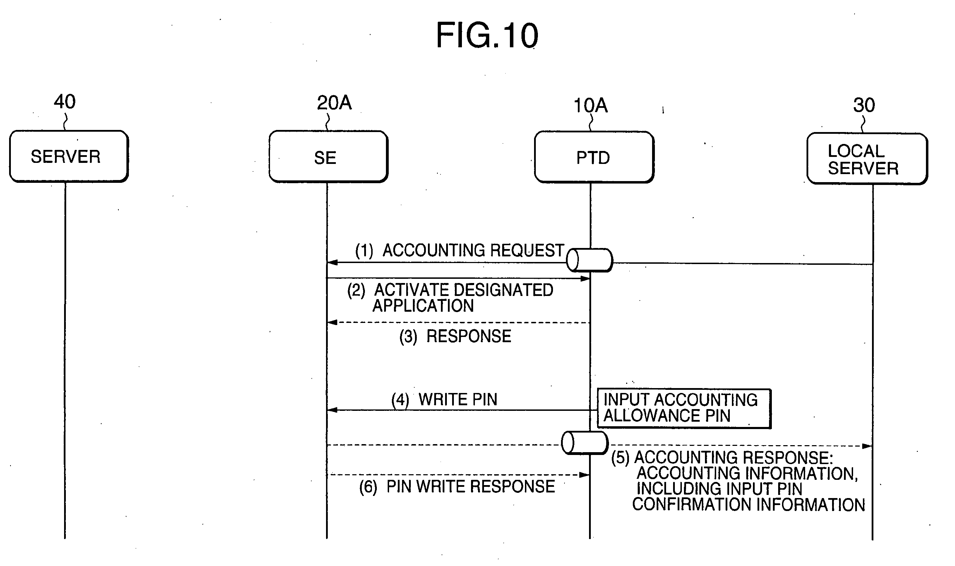

The operation for the second embodiment in Fig. 8, i.e., a request processing method using the hybrid portable communication terminal 70, will now be described while referring to Figs. 9 and 10. As explained for the first embodiment, assume that a user having the PTD 10A in which the SE 20A is mounted is shopping in a supermarket, and pays for purchases at a cash register. Since the local server 30 is installed at the cash register, the user approaches the PTD 10A, including the SE 20A, near the interface 31 for the local server 30. During this approach, (1) the local server 30 transmits an accounting request to the SE 20A through the PTD 10A. Upon receiving the accounting request through the interface 21, the CPU 22 performs a predetermined analyzation, and reads a predetermined application program from the memory 23 and activates it. If the total payment for the purchases is not greater than 5,000 yen, a payment instruction is issued by this application program, and an accounting response is transmitted to the local server 30 through the interface 21 and the interface 17, the CPU 13 and the interface 18 of the PTD 10A.

If the total payment of the purchases exceeds 5,000 yen, the accounting is not performed by the application program of the SE 20A and (2) the SE 20A issues a request to the PTD 10A, through the interfaces 21 and 17, to activate a designated application program (i application (iapp) in the example in Fig. 9). Upon receiving this request, (3) the PTD 10A transmits a response to the SE 20A, and then displays a predetermined message on a display unit 15 to ask a user whether the accounting should be performed, i.e., the CPU 13 controls the display of this message. This displayed message is, for example, "The total payment for the purchases is 15,800 yen. Since the payment exceeds 5,000 yen, the automatic accounting is disabled. If you approve the payment, enter your password and depress #. If you do not approve the payment, depress 0 and #". The user then enters the required data in accordance with this instruction. When the user depresses 0 and #, no accounting is performed and a notification of this effect is transmitted to the local server 30 through the SE 20A. The password is a PIN (personal identification number) that is allocated when the SE 20A is obtained (purchased). In the above example, when the password and then # are entered, (4) the PTD 10A notifies the SE 20A that a predetermined instruction has been entered, i.e., the PIN has been entered, and the SE 20A determines whether the received PIN is correct. (5) When the PIN is correct, the SE 20A transmits to the local server 30, through the PTD 10A, a predetermined notification, i.e., accounting information indicating that the accounting is to be performed. Further, (6) the SE 20A transmits to the PTD 10A a PIN write response indicating that the notification (4) has been received. The processes (5) and (6) may be inverted.

In this example, the PTD 10A activates the application program to ask the user to approve the payment. The PTD 10A may also access the server 40 across the Internet 42 to ask for the approval.

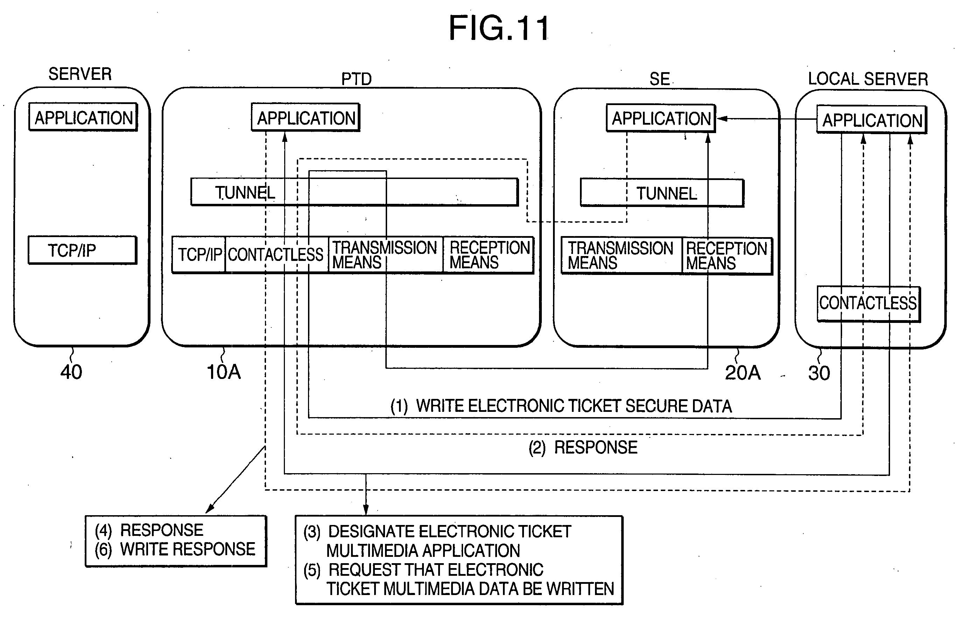

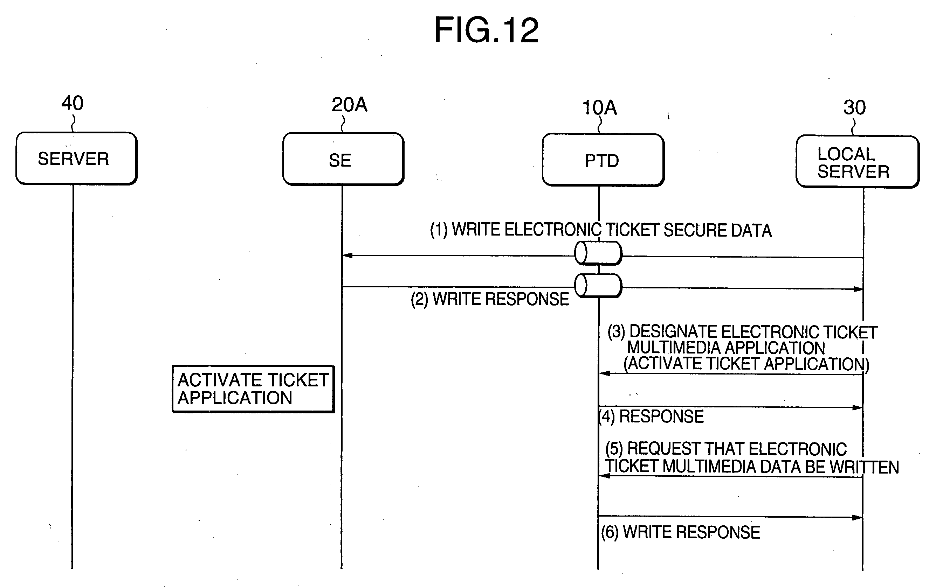

While referring to Figs. 11 and 12, an explanation will now be given for the operation of the second embodiment in Fig. 8, i.e., another example request processing method using the hybrid portable communication terminal 70. Unlike the example in Figs. 9 and 10, the operation is performed as though the local server 30 is accessing the application program of the PTD 10A directly, without going through the application program of the SE 20A. In this explanation, the hybrid portable communication terminal 70 is employed to purchase an electronic ticket from the local server 30.

A user approaches the PTD 10A that includes the SE 20A near the interface 31 of the local server 30. As a result of this approach, (1) the local server 30 transmits, to the PTD 10A, an electronic ticket secure data write request. Upon receiving the electronic ticket secure data write request through the interface 18, the CPU 13 transmits the electronic ticket secure data write request to the SE 20A through the PTD 10A. As a result, (2) the SE 20A transmits a response through the PTD 10A as notification that the electronic ticket secure data have been written to the local server. Thereafter, the local server 30 and the PTD 10A communicate with each other, and then, (3) the local server 30 designates, for the PTD 10A, an electronic ticket multimedia application program to be activated. The PTD 10A then reads, from the memory 14, the electronic multimedia application program and activates it, and (4) transmits a response to this effect to the local server 30. Thereafter, (5) the local server 30 transmits, to the PTD 10A, an electronic ticket multimedia data write request, and (6) the PTD 10A transmits a write response to the local server 30.

In this example, the PTD 10A activates the application program and performs data processing for an electronic ticket. However, the PTD 10A may access the server 40 across the Internet 42 to request further data processing.

In the second embodiment, as is shown in Fig. 8, since the PTD 10A, not the SE 20A, communicates directly with the local server 30, communication with the local server 30 is disabled when the PTD 10A is powered off. On the other hand, in the first embodiment, as is shown in Fig. 3, since the SE 20 communicates directly with the local server 30, communication with the local server 30 is enabled when the PTD 10 is powered off. Therefore, any accounting that does not require the entry of a password (PIN) can be completed while the power for the PTD 10 is off.

The present invention is not limited to the configurations and operations that are included in the embodiments, and can be modified as follows. A process request issued by an external communication terminal can be a process request issued by an accounting terminal, such as a transportation facility, a fee-charging facility, a ticket shop, a ticket vending machine or a POS terminal, in order to perform the electronic accounting required for electronic money, a prepaid card or an electronic security. Further, as the preferred mode of the invention, the data processing method of this invention additionally comprises: a step of the SE receiving additional information, during communication with the external communication terminal, whereby the received additional information is transmitted to the PTD 10 and is presented to the user by using the display device controlled by the PTD. As another preferred mode of the invention, the data processing method may further comprise: a step of the PTD receiving additional information, during communication with an external communication terminal, and the display device that is controlled by the PTD, being used to present the received additional information to the user.

As an additional preferred mode of the invention, the data processing method further comprises: a step of the SE receiving an electronic receipt after predetermined accounting has been completed through communication with an external communication terminal, during which the received electronic receipt is transmitted to the PTD and is presented to the user by using the display device that is controlled by the PTD. As a further preferred mode of the invention, the data processing method also comprises: a step of the PTD receiving an electronic receipt after predetermined accounting has been completed through communication with an external communication terminal, during which the received electronic receipt is presented to the user by using the display device that is controlled by the PTD.

As one more preferred mode of the invention, the data processing method further comprises: a step of the SE receiving PIM (Personal Information Manager) data through communication with a personal computer, an external communication terminal, during which the received PIM data are transmitted to the PTD and are presented to the user by using the display device that is controlled by the PTD. As yet one more preferred mode of the invention, the data processing method further comprises: a step of the PTD receiving PIM data through communication with a personal computer, an external communication terminal, during which the received PIM data are presented to the user by using the display device that is controlled by the PTD.

As yet another mode of the invention, the data processing method further comprises the steps of:
the SE receiving control data for a home electric appliance through communication with the home electric appliance, which is an external communication terminal; and
the SE transmitting a control command to the home electric appliance that is to be controlled,
whereupon the received control data are transmitted to the PTD and are presented to the user by using the display device that is controlled by the PTD, and
whereupon, in accordance with an instruction from the user, a predetermined control command is transmitted to the home electric appliance.

As yet an additional preferred mode of the invention, the data processing method comprises the steps of:
the PTD receiving control data for a home electric appliance during communication with the home electric appliance, which is an external communication terminal; and
the PTD transmitting a control command to the home electric appliance to be controlled,
whereupon, the received control data are presented to the user by using the display device that is controlled by the PTD, and
whereupon, in accordance with the instruction from the user, a predetermined control command is transmitted to the home electric appliance.

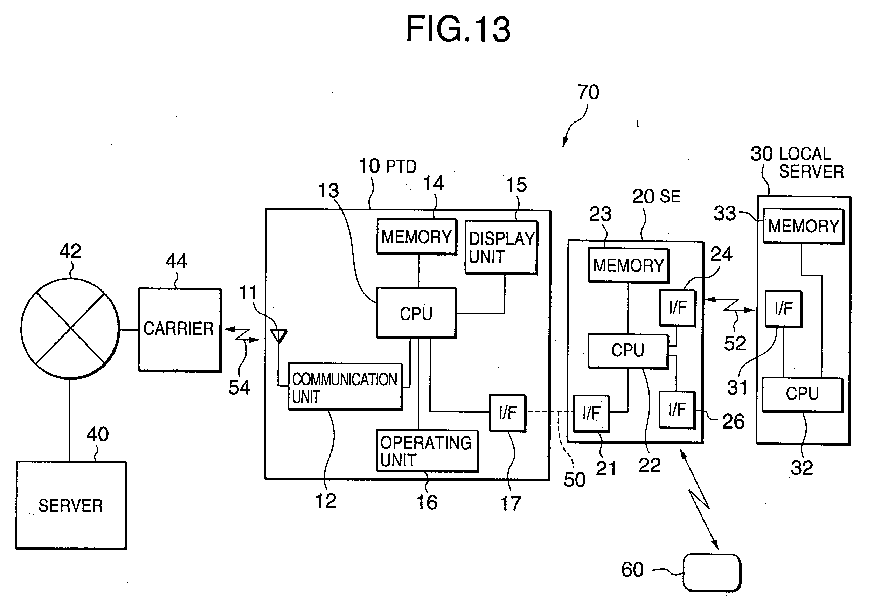

Examples obtained by expanding the embodiments will now be described. Fig. 13 is a diagram showing the configuration of an expansion example for the first embodiment. In this example, an interface (I/F) for communicating with another secure card 60 is connected to a CPU 22 of an SE 20. That is, the interface (I/F) 26 serves as a reader/writer for a contactless IC card. Therefore, data can be exchanged through communication with the secure card 60, and when, for example, the SE 60 is a prepaid card and the balance is reduced, electronic money data can be transmitted by a new secure card 60 and the balance can be increased.

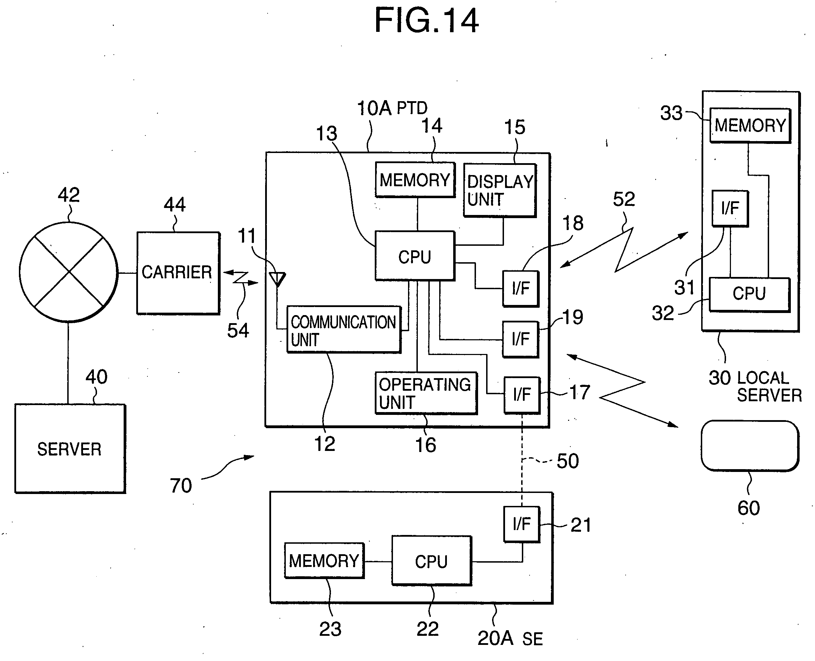

Fig. 14 is a diagram showing an expansion example for the second embodiment. In this example, an interface 19 (an I/F) for communicating with another secure card 60 is connected to a CPU 13 of a PTD 10A. Therefore, the interface 19 (an I/F) serves as a reader/writer for an contactless IC card, and data can be exchanged through communication with the secure card 60. Therefore, as well as in the expansion example for the first embodiment, the supplementing of the balance is enabled.

The individual claims of the present invention can be also understood as being the aspects specifically written below.
(1) A hybrid portable communication terminal comprising:
   a portable terminal, which is connected to the Internet through a cellular phone system according to a first protocol, and which includes
      first communication means for enabling communication with a desired server,
      second communication means for performing communication in accordance with a second protocol,
      first storage means in which a predetermined application program is stored, and
      first control means for controlling the first communication means, the second communication means and the first storage means;
   a secure card terminal, which includes
      third communication means for communicating with the portable terminal in accordance with the second protocol,
      fourth communication means for performing close-range contactless communication with an external communication terminal in accordance with a third protocol,
      second storage means in which a predetermined application program is stored, and
      second control means for controlling the third communication means, the fourth communication means and the second storage means; and
   means for detachably or fixedly connecting the secure card terminal to the portable terminal.
(2) A hybrid portable communication terminal comprising:
   a portable terminal, which is connected to the Internet through a cellular phone system according to a first protocol, and which includes
      first communication means for enabling communication with a desired server,
      second communication means for performing communication in accordance with a second protocol,
      third communication means for performing close-range contactless communication with an external communication terminal according to a third protocol,
      first storage means in which a predetermined application program is stored, and
      first control means for controlling the first communication means, the second communication means and the first storage means;
   a secure card terminal, which includes
      fourth communication means for communicating with the portable terminal in accordance with the second protocol,
      second storage means in which a predetermined application program is stored, and
      second control means for controlling the third communication means, the fourth communication means and the second storage means; and
   means for detachably or fixedly connecting the secure card terminal to the portable terminal.
(3) A hybrid portable communication terminal according to (1) or (2), wherein the third communication means has a coil antenna that enables communication using electromagnetic induction.
(4) A hybrid portable communication terminal according to (1), further comprising an interface that is connected to the second control means to provide communication with another secure card.
(5) A hybrid portable communication terminal according to (2), further comprising an interface that is connected to the first control means to provide communication with another secure card.
(6) A method whereby a request from an external communication terminal is processed by a hybrid portable communication terminal that includes a first controller for controlling a plurality of different communication means, including a cellular phone system, and a second controller for controlling other plurality of different means, including close-range communication means, comprising the steps of:
   the second controller performing close-range contactless communication with the external communication terminal and accepting a predetermined process request from the external communication terminal;
   the second controller activating a second application program to process the predetermined process request and determining whether the second application can process the predetermined process request;
   the second controller, when the second application program can handle the predetermined process request, processing the predetermined process request and transmitting the obtained results to the external communication terminal;
   the second controller, when the second application program cannot handle the predetermined process request, issuing an instruction to the first controller to activate a first application program;
   the first controller, upon receiving the instruction, transmitting a response to the second controller;
   the first controller transmitting a predetermined notification to a user;
   the first controller accepting a predetermined instruction from the user that is transmitted in response to the predetermined notification;
   the first controller transmitting a notification to the second controller indicating that the predetermined instruction has been received;
   the second controller, upon receiving the notification from the first controller, transmitting a notification to this effect to the external communication terminal through contactless communication; and
   the second controller notifying the first controller that the notification is to be, or has been, transmitted to the external communication terminal.
(7) A method whereby a request from an external communication terminal is processed by a hybrid portable communication terminal that includes a first controller for controlling a plurality of different communication means, including a cellular phone system, and a second controller for controlling other plurality of different means, including close-range communication means, comprising the steps of:
   the first controller performing close-range contactless communication with the external communication terminal, and transmitting, to the second controller, a predetermined process request that is received from the external communication terminal;
   the second controller activating a second application program to process the predetermined process request and determining whether the second application can process the predetermined process request;
   the second controller, when the second application program can handle the predetermined process request, processing the predetermined process request and transmitting the obtained results to the external communication terminal through the first controller;
   the second controller, when the second application program cannot handle the predetermined process request, issuing an instruction to the first controller to activate a first application program, and the first controller transmitting the results to the second controller;
   the first controller, thereafter, transmitting a predetermined notification to a user;
   the first controller accepting a predetermined instruction from the user that is transmitted in response to the predetermined notification;
   the first controller transmitting a notification to the second controller indicating that the predetermined instruction has been received;
   the second controller, upon receiving the notification from the first controller, transmitting a notification to this effect to the external-communication terminal through the first controller across contactless communication; and
   the external communication terminal notifying the second controller that the notification has been received from the first controller.
(8) A method whereby a request from an external communication terminal is processed by a hybrid portable communication terminal that includes a first controller for controlling a plurality of different communication means, including a cellular phone system, and a second controller for controlling other plurality of different means, including close-range communication means, comprising the steps of:
   the second controller performing close-range contactless communication with the external communication terminal and accepting a predetermined process request from the external communication terminal;
   the second controller activating a second application program to process the predetermined process request and determining whether the second application can process the predetermined process request;
   the second controller, when the second application program can handle the predetermined process request, processing the predetermined process request and transmitting the obtained results to the external communication terminal;
   the external communication terminal, when the second application program cannot handle the predetermined process request, issuing an instruction to the first controller through the second controller to activate a first application program;
   the first controller, upon receiving the instruction from the external communication terminal, transmitting a response to the external communication terminal through the second controller;
   the external communication terminal transmitting a predetermined request to the first controller through the second controller; and
   the first controller, upon receiving the predetermined request, transmitting a response to the external communication terminal through the second controller.
(9) A method whereby a request from an external communication terminal is processed by a hybrid portable communication terminal that includes a first controller for controlling a plurality of different communication means, including a cellular phone system, and a second controller for controlling other plurality of different means, including close-range communication means, comprising the steps of:
   the first controller performing close-range contactless communication with the external communication terminal, and the external communication terminal transmitting a predetermined process request to the second controller through the first controller;
   the second controller activating a second application program to process the predetermined process request and determining whether the second application can process the predetermined process request;
   the second controller, when the second application program can handle the predetermined process request, processing the predetermined process request and transmitting the obtained results to the external communication terminal through the first controller;
   the second controller, when the second application program cannot handle the predetermined process request, transmitting a notification of .this effect to the external communication terminal through the first controller;
   the external communication terminal, upon receiving the notification that the second application program cannot handle the predetermined process request, transmitting an instruction to the first controller to activate a first application program;
   the first controller, upon receiving the instruction, transmitting to the external communication terminal a response indicating that the instruction has been received;
   the external communication terminal transmitting a predetermined request to the first controller; and
   the first controller transmitting, to the external communication terminal, a response indicating that the predetermined request has been received.
(10) A request processing method, according to one of (6) to (9), whereby while using the first application program the first controller can communicate with a predetermined server across the Internet and performs a predetermined process.
(11) A request processing method, according to one of (6) to (10), whereby to transmit the predetermined notification to the user the first controller presents a predetermined display on the display device of a portable telephone.
(12) A request processing method, according to (6) or (8), whereby to accept the predetermined instruction issued by the user the first controller detects the operating state of the operating button of the portable telephone.
(13) A request processing method, according to one of (6) to (12), whereby the external process request is a process request issued by an accounting terminal, such as a transportation facility, a fee-charging facility, a ticket shop, a ticket vending machine or a POS terminal, in order to perform the electronic accounting required for electronic money, a prepaid card or an electronic security.
(14) A request processing method according to (6) or (8), further comprising a step of:
   the second controller receiving additional information while communicating with the external communication terminal,
   whereby the additional received information is transmitted to the first controller and is presented to the user by using a display device that is controlled by the first controller.
(15) A request processing method, according to (7) or (9), further comprising a step of:
   the first controller receiving additional information during communication with the external communication terminal,
   whereby the received additional information is presented to the user by using a display device that is controlled by the first controller.
(16) A request processing method, according to (6) or (8), further comprising the step of:
   the second controller receiving an electronic receipt after predetermined accounting is completed through communication with the external communication terminal,
   whereby the received electronic receipt is transmitted to the first controller and is presented to the user by using the display device that is controlled by the first controller.
(17) A request processing method, according to (7) or (9), further comprising the step of:
   the first controller receiving an electronic receipt after predetermined accounting is completed through communication with the external communication terminal,
   whereby the received electronic receipt is presented to the user by using the display device that is controlled by the first controller.
(18) A request processing method according to (6) or (8), further comprising the step of;
   the second controller receiving PIM data during communication with a personal computer that is the external communication terminal,
   whereby the received PIM data are transmitted to the first controller and are presented to the user by using the display device that is controlled by the first controller.
(19) A request processing method, according to (7) or (9), further comprising the step of:
   the first controller receiving PIM data during communication with a personal computer that is the external communication terminal,
   whereby the received PIM data are presented to the user by using the display device that is controlled by the first controller.
(20) A request processing method, according to (6) or (8), further comprising the steps of:
   the second controller receiving control data for a home electric appliance during communication with the home electric appliance that is the external communication terminal; and
   the second controller transmitting a control command to the home electric appliance that is to be controlled,
   whereby the received control data are transmitted to the first controller and are presented to the user by using the display device that is controlled by the first controller, and
   whereby, in accordance with an instruction entered by the user, a predetermined control command is transmitted to the home electric appliance.
(21) A request processing method, according to (7) or (9), further comprising the steps of:
   the first controller receiving control data for a home electric appliance during communication with the home electric appliance that is the external communication terminal; and
   the first controller transmitting a control command to the home electric appliance that is.to be controlled,
   whereby the received control data are presented to the user by using the display device that is controlled by the first controller, and
   whereby, in accordance with an instruction entered by the user, a predetermined control command is transmitted to the home electric appliance.

As is apparent from the above description, according to the present invention, a data processing apparatus (e.g., a hybrid portable communication terminal) comprising terminals belonging to different communication systems, employs together or selectively, as needed, an application program included in the second device (e.g., a portable telephone) and an application program, included in the first device (e.g., a secure card terminal), for performing various data processes through close-range, contactless communication with an external communication terminal. Therefore, in a environment wherein high security is maintained, fast data exchange and fast data processing can be performed. In addition, it is possible to eliminate any reduction in the efficiency and the complexity of the operation when a conventional portable terminal and a contactless IC card are employed independently or are merely employed together.

## Claims

1. A data processing apparatus comprising:
a first device; and
a second device detachably or fixedly connected to said first device,
wherein said first device includes
second communication means for communicating with said second device,
first storage means for storing a first application,
first control means for executing said first application, and for controlling said second communication means and said first storage means, and
wherein said second device includes
third communication means for communicating with said first device,
fourth communication means for communicating with an external device,
second storage means for storing a second application, and
second control means for controlling said second application, and for controlling said third communication means, said fourth communication means and said second storage means.

2. The data processing apparatus according to claim 1, wherein, before or after a first process request has been received from said fourth communication means, said second control means activates said second application to process said first process request;
wherein, when all or part of said first process request is a second process request that is to be processed by said first application, said second application transmits said second process request to said second communication means through said third communication means;
wherein, before or after said second process request is received from said second communication means, said first control means activates said first application to process said second process request; and
wherein said first application processes said second process request, and transmits a process response to said third communication means through said second communication means.

3. The data processing apparatus according to claim 1, wherein, before or after a first process request has been received from said fourth communication means, said second control means activates said second application to process said first process request;
wherein said second application generates a second process request that is an instruction to obtain information required for processing said first process request, and transmits said second process request to said second communication means through said third communication means;
wherein said first control means processes said second process request, and transmits a process response to said third communication means through said second communication means.

4. The data processing apparatus according to claim 1, wherein said first device includes output means for outputting information;
wherein, before or after a first process request has been received from said fourth communication means, said second control means activates a second application to process said first process request;
wherein said second application transmits, to said second communication means through said third communication means, information that is generated by processing said first process request; and
wherein said first control means transmits, to said output means, said information received from said second communication means.

5. The data processing apparatus according to claim 1, wherein said first device includes output means for outputting information;
wherein, before or after a first process request has been received from said fourth communication means, said second control means activates a second application to process said first process request;
wherein, when said first process request has been processed, said second application transmits, to said second communication means through said third communication means, additional information that is added to said first process request; and
wherein said first control means transmits, to said output means, said additional information received from said second communication means.

6. The data processing apparatus according to claim 2, wherein said second process request is an instruction for requesting the acquisition of information required for processing said first process request.

7. The data processing apparatus according to claim 2, wherein said second process request is an instruction for requesting the acquisition of secure information required for performing secure processing for said first process request.

8. The data processing apparatus according to claim 2, wherein said second process request is an instruction for requesting the supplementary process for an insufficient numerical value required for numerical processing for said first process request.

9. The data processing apparatus according to claim 7, wherein said first device includes:
output means for outputting information; and
input means for accepting the entry of information,
wherein said output means outputs data to request the entry of secure process information, and said input means accepts secure process information entered following the reception of said output data.

10. The data processing apparatus according to claim 8, wherein said first device includes:
first communication means for communicating with an external device;
output means for outputting information; and
input means for accepting the information that is entered,
wherein said first application employs said first communication means to communicate with a predetermined server across a network, and in accordance with an instruction received by said input means, said second process request is processed.

11. A data processing apparatus comprising:
a first device; and
a second device detachably or fixedly connected to said first device,
wherein said first device includes
second communication means for communicating with said second device,
third communication means for communicating with an external-device of said data processing apparatus,
first storage means for storing a first application,
first control means for executing said first application, and for controlling said second communication means and said first storage means, and
wherein said second device includes
fourth communication means for communicating with said first device,
second storage means for storing a second application, and
second control means for controlling said second application, and for controlling said fourth communication means and said second storage means.

12. The data processing apparatus according to claim 11, wherein, upon receiving a first process request from said third communication means, said first control means transmits said first process request to said fourth communication means through said second communication means;
wherein, before or after said first process request has been received from said fourth communication means, said second control means activates a second application to process said first process request;
wherein, when all or part of said first process request is a second process request that is to be processed by said first application, said second application transmits said second process request to said second communication means through said fourth communication means;
wherein, before or after said second process request is received from said second communication means, said first control means activates said first application to process said second process request; and
wherein said first application processes said second process request, and transmits, to said fourth communication means through said second communication means, a second process response indicating the process results;
wherein said first application processes said second process request, and transmits to said fourth communication means, through said second communication means, a second process response indicating the process results;
wherein, upon receiving said second process response from said fourth communication means, said second application employs said second process response to process said first process request, and transmits to said second communication means, through said fourth communication means, a first process response indicating the process results; and
wherein, upon receiving said first process response from said second communication means, said first control means transmits said first process response to said third communication means.

13. The data processing apparatus according to claim 11, wherein, upon receiving a first process request from said third communication means, said first control means transmits said first process request to said fourth communication means through said second communication means;
wherein, before or after said first process request has been received from said fourth communication means, said second control means activates a second application to process said first process request;
wherein said second application generates a second process request that is an instruction to obtain information required for processing said first process request, and transmits said second process request to said second communication means through said fourth communication means;
wherein said first control means processes said second process request received from said second communication means, and transmits, to said fourth communication means through said second communication means, a second process response indicating the process results;
wherein, upon receiving said second process response from said fourth communication means, said second application employs said second process response to process said first process request, and transmits to said second communication means, through said fourth communication means, a first process response indicating the process results; and
wherein, upon receiving said first process response from said second communication means, said first control means transmits said first process response to said third communication means.

14. The data processing apparatus according to claim 11, wherein said first device includes output means for outputting information;
wherein, upon receiving a first process request from said third communication means, said first control means transmits said first process request to said fourth communication means through said second communication means;
wherein, before or after said first process request has been received from said fourth communication means, said second control means activates a second application to process said first process request;
wherein said second application transmits, to said second communication means through said fourth communication means, information that is generated by processing said first process request; and
wherein said first control means transmits, to said output means, said information received from said second communication means.

15. The data processing apparatus according to claim 11, wherein said first device includes output means for outputting information;
wherein, upon receiving a first process request from said third communication means, said first control means transmits said first process request to said fourth communication means through said second communication means;
wherein, before or after said first process request has been received from said fourth communication means, said second control means activates a second application to process said first process request;
wherein, when said first process request has been processed, said second application transmits, to said second communication means through said third communication means, additional information that is added to said first process request; and
wherein said first control means transmits, to said output means, said additional information received from said second communication means.

16. A data processing method, for a data processing apparatus including a first device and a second device detachably or fixedly connected to said first device, whereby an external process request is processed by the cooperative employment of said first device and said second device, comprising:
a first step of said second device receiving, according to a third protocol, a first process request, which is a process request received from an external communication terminal;
a second step of, before or after said first step, said second device activating said second application to process said first process request;
a third step of said second application determining whether all or part of said first process request includes a second process request that is to be processed by said first device;
a fourth step of, when it is ascertained at said third step that said second process request is included, said second device transmitting said second process request to said first device in accordance with a second protocol;
a fifth step of said first device receiving said second process request in accordance with said second protocol;
a sixth step of, before or after said fifth step, said first device activating a first application to process said second process request;
a seventh step of said first application processing said second process request;
an eighth step of said first device transmitting a second process response, indicating the process results obtained at said seventh step, to said second device in accordance with said second protocol;
a ninth step of said second device receiving said second process response in accordance with said second protocol;
a tenth aspect of said second application employing said second process response to process said first process request; and
an eleventh step of said first device transmitting a first process response, indicating the process results obtained at said tenth step, in accordance with said third protocol.

17. A data processing method, for a data processing apparatus including a first device and a second device detachably or fixedly connected to said first device, whereby an external process request is processed by the cooperative employment of said first device and said second device, comprising:
a first step of said second device receiving, according to a third protocol, a first process request, which is a process request received from an external communication terminal;
a second step of, before or after said first step, said second device activating said second application to process said first process request;
a third step of said second application determining whether there is a lack of information to process said first process request, or whether the acquisition of lacking information from said first device is required;
a fourth step of, when it is ascertained at said third step that the acquisition of said information is required, said second device generating a second process request that is an instruction to request the acquisition of said information that is lacking;
a fifth step of said second device transmitting said second process request to said first device in accordance with said second protocol;
a sixth step of said first device receiving said second process request in accordance with said second protocol;
a seventh step of said first device processing said second process request;
an eighth step of said first device transmitting a second process response, indicating the process results obtained at said seventh step, to said second device in accordance with said second protocol;
a ninth step of said second device receiving said second process response in accordance with said second protocol;
a tenth step of said second application employing said second process response to process said first process request; and
an eleventh step of said first device transmitting a first process response, indicating the process results obtained at said tenth step, in accordance with said third protocol.

18. A data processing method, for a data processing apparatus including a first device and a second device detachably or fixedly connected to said first device, whereby an external process request is processed by the cooperative employment of said first device and said second device, comprising:
a first step of said second device receiving, according to a third protocol, a first process request, which is a process request received from an external communication terminal;
a second step of, before or after said first step, said second device activating said second application to process said first process request;
a third step of said second application processing said first process request, and generating process result information;
a fourth step of said second device transmitting said process result information to said first device in accordance with said second protocol;
a fifth step of said first device receiving said process result information in accordance with said second protocol; and
a sixth step of said first device outputting said process result information.

19. A data processing method, for a data processing apparatus including a first device and a second device detachably or fixedly connected to said first device, whereby an external process request is processed by the cooperative employment of said first device and said second device, comprising:
a first step of said second device receiving, according to a third protocol, a first process request, which is a process request received from an external communication terminal, and additional information that is added to said first process request;
a second step of, before or after said first step, said second device activating said second application to process said first process request;
a third step of said second application processing said first process request;
a fourth step of said second device transmitting said additional information to said first device in accordance with said second protocol;
a fifth step of said first device receiving said additional information in accordance with said second protocol; and
a sixth step of said first device outputting said additional information.

20. A data processing method, for a data processing apparatus including a first device and a second device detachably or fixedly connected to said first device, whereby an external process request is processed by the cooperative employment of said first device and said second device, comprising:
a first step of said first device receiving, in accordance with a third protocol, a first process request, which is a process request received from an external communication terminal;
a second step of said first device transmitting said first process request to said second device in accordance with a second protocol;
a third step of said second device receiving said first process request according to a second protocol;
a fourth step of, before or after said first step, said second device activating said second application to process said first process request;
a fifth step of said second application determining whether all or part of said first process request includes a second process request that is to be processed by said first device;
a sixth step of, when it is ascertained at said third step that said second process request is included, said second device transmitting said second process request to said first device in accordance with a second protocol;
a seventh step of said first device receiving said second process request in accordance with said second protocol;
an eighth step of, before or after said seventh step, said first device activating a first application to process said second process request;
a ninth step of said first application processing said second process request;
a tenth step of said first device transmitting a second process response, indicating the process results obtained at said ninth step, to said second device in accordance with said second protocol;
an eleventh step of said second device receiving said second proeess response in accordance with said second protocol;
a twelfth step of said second application employing said second process response to process said first process request; and
a thirteenth step of said second device transmitting, to said first device a first process response, indicating the process results obtained at said twelfth step, in accordance with said second protocol;
a fourteenth step of said first device receiving said first process response in accordance with said second protocol; and
a fifteenth step of said first device transmitting said first process response in accordance with said third protocol.

21. The first device according to any one of claims 1 to 15.

22. The second device according to any one of claims 1 to 15.

23. A computer program that, when extended on a data processing apparatus, instructs the data processing apparatus to effect the method of any one of claims 15 to 20.
